# EUROPÄISCHE PATENTANMELDUNG

(11) **EP 2 927 538 A1**
(43) Veröffentlichungstag der Anmeldung: **07.10.2015**
(21) Anmeldenummer: 15158720.1
(22) Anmeldetag: 12.03.2015
(51) Int. Cl.: F16H 63/30

(54) **Schaltbares Getriebe für ein landwirtschaftliches Fahrzeug**

(30) Priorität: 03.04.2014 DE 102014206382
(71) Anmelder: ZF Friedrichshafen AG, 88046 Friedrichshafen (DE)
(72) Erfinder: Kramer, Benjamin, 99768 Ilfeld (DE); Igl, Stefan, 94474 Vilshofen (DE)

(57) **Zusammenfassung**

Ein Kriechgang eines schaltbaren Getriebes für ein landwirtschaftliches Mobilfahrzeug ist angelegt, wenn eine erste Kolbenfläche (11) und eine zweite Kolbenfläche (12) gleichzeitig mit Druckmittel beaufschlagt sind, wobei hierbei ein Ventil (5) bestromt ist.

## Beschreibung

Die Erfindung bezieht sich auf ein schaltbares Getriebe für ein landwirtschaftliches Fahrzeug nach der im Oberbegriff von Anspruch 1 näher definierten Art.

Gattungsgemäße landwirtschaftliche Fahrzeuge, wie beispielsweise Traktoren, weisen häufig einen Straßengang und einen Kriechgang auf, um bei Fahrten im Gelände auf eine hohe Getriebeübersetzung zurückgreifen zu können. Das Umschalten vom Straßengang in den Kriechgang erfolgt häufig über Hebel und daran angelenkte Bowdenzüge. Die Hebel sind häufig unergonomisch im Fahrzeug angeordnet.

Die DE4220622A1 offenbart eine Schaltvorrichtung für ein schaltbares Getriebe, bei welcher ein Kolben jeweils von einer Seite mit Druck, insbesondere Luftdruck, beaufschlagbar ist, um über einen Schaltfinger eine Schaltgabel zu betätigen.

Der vorliegenden Erfindung liegt die Aufgabe zugrunde ein schaltbares Getriebe für ein landwirtschaftliches Mobilfahrzeug zu schaffen, bei welchem ergonomisch und betriebssicher ein Straßengang und ein Kriechgang schaltbar ist.

Die Aufgabe wird mit einem auch die kennzeichnenden Merkmale des Hauptanspruchs aufweisenden gattungsgemäßen schaltbaren Getriebes gelöst.

Erfindungsgemäß weißt das schaltbare Getriebe eine Schaltvorrichtung auf, deren Kolben mit einem Schaltfinger in Wirkverbindung steht, über welchen eine Schaltgabel betätigbar ist, mittels welcher ein Straßengang und ein Kriechgang schaltbar ist.

Der Kolben weist eine erste Kolbenfläche und eine zweite Kolbenfläche auf, welche beide mit Druckmittel beaufschlagbar sind. Die erste Kolbenfläche ist dabei permanent mit Druckmittel beaufschlagbar, wobei bei der zweiten Kolbenfläche das Druckmittel über ein Ventil vorzugsweise ein 3/2-Wege-Ventil zu- und abschaltbar ist. Dabei ist die zweite Kolbenfläche größer als die erste Kolbenfläche ausgeführt, wodurch bei Druckbeaufschlagung beider Kolbenflächen mit vorzugsweise demselben Druck der Kolben in eine erste Stellung verschoben wird und beim Abschalten des Drucks auf die zweite Kolbenfläche und gleichzeitigen Beibehalten des Drucks auf die erste Kolbenfläche, der Kolben in eine zweite Stellung verschoben wird.

Vorzugsweise ist die erste Stellung die Stellung, in welcher das Getriebe sich im Kriechgang befindet und die zweite Stellung ist die Stellung, bei welcher sich das Fahrzeug im Straßengang befindet. Das Ventil, welches das Druckmittel zur zweiten Kolbenfläche zu- und abschaltet, ist vorzugsweise so geschaltet, dass beim Bestromen des Ventils Druckmittel zur zweiten Kolbenfläche gelangt und beim stromlos Schalten des Ventils die zweite Kolbenfläche drucklos geschaltet wird, indem das Druckmittel beispielsweise zu einem Druckmittelreservoir geführt wird. Fällt beispielsweise die elektrische Versorgung aus, so schaltet das Ventil somit automatisch die zweite Kolbenfläche drucklos, wodurch der Kolben sich in die zweite Stellung bewegt und das Getriebe automatisch in den Straßengang geschaltet wird. Somit ist ausgeschlossen, dass bei einem Abschleppen des Fahrzeugs sich das Fahrzeug im Kriechgang befindet und durch die hohen Drehzahlen Schäden im Getriebe entstehen.

Indem das Ventil elektrisch ansteuerbar ist, kann der Schalter zum Ansteuern des Ventils frei ergonomisch vorteilhaft für den Fahrer positioniert werden.

Wirkt die Schaltgabel auf eine Synchronisierung, so besteht die Möglichkeit, den Kolbenverfahrweg sowie die Position der Schaltschiene einzustellen, um Beschädigungen an der Synchronisation zu vermeiden. Dies kann einerseits über Einstellscheiben geschehen und andererseits beispielsweise über Einstellschrauben auf der Schaltschiene.

In einer weiteren Ausgestaltungsform der Erfindung besteht die Möglichkeit, die Synchronisation durch eine Klauenschaltung zu ersetzen und statt dem 3/2-Wege-Ventil ein Ventil zu verwenden, welches eine dritte Stellung des Kolbens ermöglicht, wodurch die Schaltgabel in eine Neutralstellung bringbar ist. In dieser Neutralstellung besteht die Möglichkeit, die Klauenschaltung zu synchronisieren, um anschließend die Klauen wieder zu verbinden.

Durch die erfindungsgemäße Lösung wird ein schaltbares Getriebe geschaffen, welches einen Straßengang und einen Kriechgang aufweist, welche auf einfache Weise geschaltet werden können, wobei das Fahrzeug bei einem Schaden automatisch im Straßengang abschleppbar ist.

Weitere Merkmale sind der Figurenbeschreibung zu entnehmen.

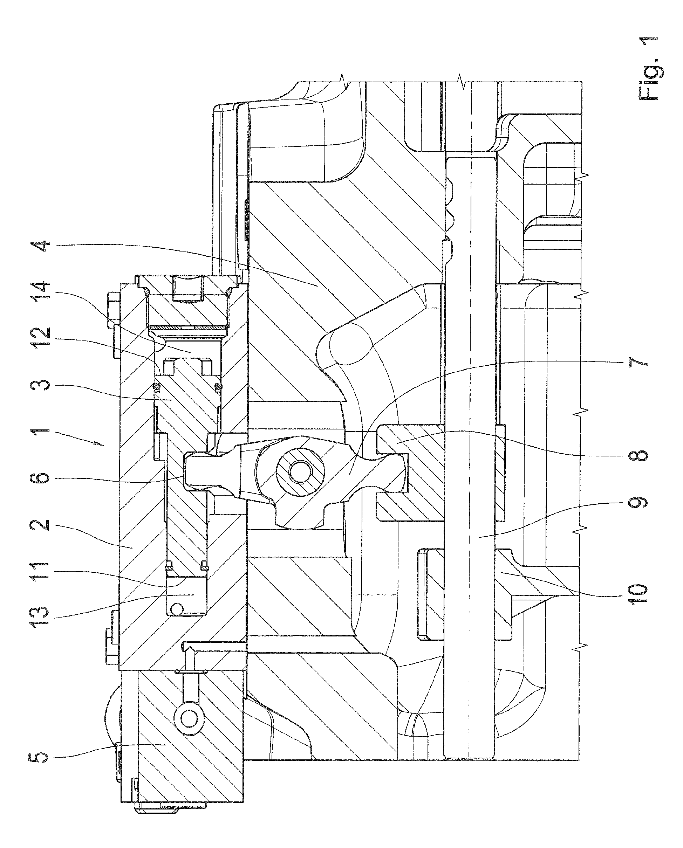

Die einzige Figur zeigt einen Ausschnitt eines schaltbaren Getriebes mit einer Schaltvorrichtung 1, mit einem Zylinder 2 und einem Kolben 3, wobei der Zylinder 2 mit einem Getriebegehäuse 4 verbunden ist. Am Zylinder 2 ist ein Ventil 5, vorzugsweise ein 3/2-Wege-Ventil, angeordnet. Der Kolben 3 weist eine Nut 6 auf, in welche ein Schaltfinger 7 eingreift. Der Schaltfinger 7 greift in einen Mitnehmer 8 ein, welcher auf der Schaltschiene 9 befestigt ist. Ebenfalls auf der Schaltschiene 9 ist eine Schaltgabel 10 befestigt, welche mit einer nichtdargestellten Synchronisation oder Klauenkupplung zusammenwirkt. Der Kolben weist eine erste Kolbenfläche 11 und eine zweite Kolbenfläche 12 auf, wobei die zweite Kolbenfläche 12 größer ist als die erste Kolbenfläche 11. Der Zylinder 2 und die erste Kolbenfläche 11 bildet einen Raum 13 und der Zylinder 2 mit der zweiten Kolbenfläche 12 bildet einen Raum 14. Von einer nichtdargestellten Druckmittelquelle wird beim Betrieb des Getriebes permanent Druckmittel in den Raum 13 gefördert. Die Druckmittelquelle ist zusätzlich über das Ventil 5 mit dem Raum 14 verbindbar. Wird das Ventil 5 bestromt, so gelangt das Druckmittel von der Druckmittelquelle in den Raum 14. Da die zweite Kolbenfläche 12 größer ist als die erste Kolbenfläche 11, bewegt sich der Kolben 3 in seine erste Stellung, in welcher der Kriechgang geschaltet ist. Wird das Ventil 5 stromlos geschaltet, so verbindet das Ventil 5 den Raum 14 mit einem Druckmittelreservoir, wodurch der Raum 14 drucklos geschaltet ist und der Raum 13 immer noch mit Druck beaufschlagt bleibt. Dadurch bewegt sich der Kolben 3 in seine zweite Stellung und das Getriebe wird in den Straßengang geschaltet.

### Bezugszeichen

- 1: Schaltvorrichtung
- 2: Zylinder
- 3: Kolben
- 4: Getriebegehäuse
- 5: Ventil
- 6: Nut
- 7: Schaltfinger
- 8: Mitnehmer
- 9: Schaltschiene
- 10: Schaltgabel
- 11: erste Kolbenfläche
- 12: zweite Kolbenfläche
- 13: Raum
- 14: Raum

## Patentansprüche

1. Schaltbares Getriebe für ein landwirtschaftliches Mobilfahrzeug, wobei das schaltbare Getriebe eine Schaltvorrichtung (1) aufweist mit einem Schaltfinger (7), welcher mit einer Schaltgabel (10) in Wirkverbindung steht und der Schaltfinger (7) mit einem Kolben (3) in Wirkverbindung steht, wobei der Kolben (3) eine erste Kolbenfläche (11) und eine zweite Kolbenfläche (12) aufweist und die Kolbenflächen (11, 12) mit Druckmittel beaufschlagbar sind, **dadurch gekennzeichnet, dass** die erste Kolbenfläche (11) kleiner ist als die zweite Kolbenfläche (12) und die erste Kolbenfläche (11) unabhängig davon, ob die zweite Kolbenfläche (12) mit Druckmittel beaufschlagt ist, mit Druckmittel beaufschlagbar ist, wodurch bei mit Druckmittel beaufschlagter ersten Kolbenfläche (11) und mit Druckmittel beaufschlagter zweiten Kolbenfläche (12) der Kolben (3) in eine erste Stellung verschoben ist und bei mit Druckmittel beaufschlagter ersten Kolbenfläche (11) und nicht mit Druckmittel beaufschlagter zweiten Kolbenfläche (12) der Kolben in eine zweite Stellung verschoben ist.

2. Schaltbares Getriebe nach Anspruch 1, **dadurch gekennzeichnet, dass** die Kolbenflächen (11, 12) benachbart angeordnet sind.

3. Schaltbares Getriebe nach Anspruch 1, **dadurch gekennzeichnet, dass** die Schaltgabel (10) auf eine Schalteinrichtung einwirkt, mittels welcher ein Straßengang und ein Kriechgang eines landwirtschaftlichen Fahrzeugs schaltbar ist.

4. Schaltbares Getriebe nach Anspruch 3, **dadurch gekennzeichnet, dass** die erste Stellung dem Kriechgang entspricht.

5. Schaltbares Getriebe nach Anspruch 1, **dadurch gekennzeichnet, dass** ein Zylinder (2) den Kolben (3) umgibt, wobei der Zylinder (2) mit einem Getriebegehäuse (4) verbunden ist, wobei das Getriebegehäuse (4) einen Durchbruch für den Schaltfinger (7) aufweist.

6. Schaltbares Getriebe nach Anspruch 5, **dadurch gekennzeichnet, dass** ein Ventil (5) mit dem Zylinder (2) verbunden ist, über welches Druckmittel auf die zweite Kolbenfläche (12) schaltbar ist.

7. Schaltbares Getriebe nach Anspruch 1, **dadurch gekennzeichnet, dass** der Kolben (3) eine Nut (6) aufweist, in welche der Schaltfinger (7) eingreift.

8. Schaltbares Getriebe nach Anspruch 6, **dadurch gekennzeichnet, dass** das Ventil im bestromten Zustand die zweite Kolbenfläche (12) mit einer Druckmittelquelle verbindet.
